Europäisches Patentamt

European Patent Office

Office européen des brevets

(11) Veröffentlichungsnummer: **0 248 171**
**B1**

# (12) EUROPÄISCHE PATENTSCHRIFT

(45) Veröffentlichungstag der Patentschrift:
20.12.89

(21) Anmeldenummer: 87105407.8

(22) Anmeldetag: 11.04.87

(51) Int. Cl.⁴: **C 04 B 35/66,** C 04 B 35/04,
F 27 D 1/16

(54) **Feuerfeste thixotrope Vibrations-Masse sowie Verfahren zur Vibrationszustellung von metallurgischen Gefässen mit dieser Masse.**

(30) Priorität: 07.05.86 DE 3615506

(43) Veröffentlichungstag der Anmeldung:
09.12.87 Patentblatt 87/50

(45) Bekanntmachung des Hinweises auf die Patenterteilung:
20.12.89 Patentblatt 89/51

(84) Benannte Vertragsstaaten:
AT BE DE FR GB IT LU SE

(56) Entgegenhaltungen:
EP-A- 0 015 638
EP-A- 0 119 812
DE-A- 3 027 192
GB-A- 2 097 378
US-A- 3 259 672
US-A- 3 661 608
US-A- 4 060 424

(73) Patentinhaber: Martin & Pagenstecher GmbH,
Schanzenstrasse 31, D-5000 Köln 80 (DE)

(72) Erfinder: König, Gert, Dr. rer. nat., Im Schönen Winkel,
D-4133 Neukirchen/Vlyn (DE)
Erfinder: Markov, Alexander, Dipl.-Ing. Ent. Ing.,
Baackesweg 76, D-4150 Krefeld (DE)

(74) Vertreter: Patentanwaltsbüro Cohausz & Florack,
Postfach 14 01 20 Schumannstrasse 97,
D-4000 Düsseldorf 1 (DE)

**Beschreibung**

Die Erfindung betrifft eine feuerfeste thixotrope selbsthärtende Vibrationsmasse auf der Basis von Magnesit sowie ein Verfahren zur Vibrationszustellung von metallurgischen Gefäßen, insbesondere von Stahlwerkspfannen, mit dieser Masse.

Bei der Zustellung metallurgischer Gefäße unter Vibration der Zustellmasse wird die als Thixotropie bekannte Eigenschaft geeigneter Feuerfestmassen ausgenutzt, unter Einwirkung von Schwingungen flüssig zu werden und bei Beendigung der Schwingungseinwirkungen in einen festen Zustand überzugehen.

Diese Zustelltechnik hat in der Stahlindustrie Eingang gefunden bei der Auskleidung von Abstrichrinnen von Hochöfen. Dabei wird die feuerfeste thixotrope Masse in die Abstrichrinne eingefüllt, mit Hilfe einer Vibrationsschablone zum Fließen gebracht und homogenisiert und verdichtet (DE-OS 2 915 598).

Mit dieser Technik sind auch Pfannen in der Gießereiindustrie mit geringen Bauhöhen zugestellt worden (Gießerei 67, 1980, Nr. 21, S. 678 bis 681). Ferner ist vorgeschlagen worden, auch Stahlwerkspfannen auf diese Weise zuzustellen. Verwendet wurden Massen aus Zirkonsilikat und Kieselsäure mit einem geringen Anteil an Tonerdezement und nicht näher beschriebenen extrem kleinen Teilchen; in der Schlackenzone der Pfanne wurde dabei eine Masse mit 90% Zirkonsilikat und in der Stahlzone eine Masse mit 70% Zirkonsilikat eingesetzt (Nippon Kokan «Technical Report Overseas», Nr. 37, 1983, S. 51 bis 53).

Bei der Zustellung von Stahlwerkspfannen überwiegt jedoch die Zustellung entweder mit feuerfesten Steinen oder die monolithische Zustellung durch Stampfen oder Slingern von feuerfesten Massen. Der Grund dürfte darin zu suchen sein, daß an die feuerfeste Zustellung von Stahlwerkspfannen, in denen heute häufig auch metallurgische Behandlungen der Schmelze durchgeführt werden, hohe Anforderungen an ihre Haltbarkeit gestellt werden. So sind alle Versuche mit gestampften oder geslingerten Pfannen auf der Basis basischer Massen anstelle teurerer basischer Steine fehlgeschlagen, weil durch Infiltration der Massen sowie Schwinden und Abplatzen der Zustellung ein vorzeitiger Verschleiß erfolgte. Eine der Ursachen war die hohe Porosität der Stampf- bzw. Slingermassen.

Die aus Massen aufgebaute feuerfeste Zustellung von Stahlwerkspfannen wird überwiegend durch Infiltration und Verschlackung zerstört. Durch Infiltration dringen die flüssigen Schlacken und die Schmelze in die feuerfeste Zustellung ein, wo Reaktionen zwischen Schlacke/Schmelze mit dem feuerfesten Material der Zustellung stattfinden, die eine Zerstörung der feuerfesten Zustellung herbeiführen. Wesentlich für die Schlackenbeständigkeit der feuerfesten Zustellung sind dabei neben der Feuerfestigkeit und dem Mineralaufbau die Dichte der eingesetzten feuerfesten thixotropen Masse. Die Fachwelt ist bisher offensichtlich der Auffassung gewesen, daß bei Stahlwerkspfannen eine ausreichende Dichte der feuerfesten Zustellung durch Vibration nicht erreicht werden kann.

Hinzu kommt ferner, daß Stahlwerkspfannen mit heute üblichem Fassungsvermögen von 80 bis 320 t, Zustellungshöhen von 3 m und mehr aufweisen. Bei diesen Zustellungshöhen bestehen neben dem Problem einer ausreichenden Dichte der Zustellung in der Fachwelt auch Bedenken, daß die vibrierte Zustellung nach der Entfernung der Schablone keine ausreichende Eigenfestigkeit aufweist und in sich zusammenfällt.

Aus der EP-A-0 015 638 ist eine gießbare feuerfeste Masse zur Herstellung von Schieberplatten bekannt, die im wesentlichen aus 1 bis 5% eines langkettigen glasigen Polyphosphates, aus 0,1 bis 0,5% Borsäure und aus feuerfesten Periklas-Körnern besteht. Die Masse wird beispielsweise in eine metallische Form gegossen. Zur vollständigen Ausfüllung der Form und zur Entfernung von Luftblasen wird die Masse vibriert. Anschließend wird die Schieberplatte bei Raumtemperatur getrocknet und dann in zwei Stufen auf 70 und 150°C erwärmt. Die Eignung dieser Masse für die Auskleidung von metallurgischen Gefäßen, insbesondere von Stahlwerkspfannen, ist nicht beschrieben worden.

Aus der DE-OS 3 027 192 ist eine rüttelfähige, plastische Masse auf der Basis von Magnesit bekannt, die durch 4 bis 25% Tonminerale und einen alkalischen Elektrolyten in Form von Phosphat gekennzeichnet ist. Eine Masse aus 4 bis 25% Tonmineralen und Magnesit hat jedoch eine so geringe Feuerfestigkeit, daß sie bei den Temperaturen des flüssigen Stahles nicht brauchbar ist. Außerdem dürfte die Gefahr bestehen, daß die Zustellung beim Ziehen der Schablone zusammensinkt.

Aus der DE-OS 3 001 553 ist eine vibrierfähige Masse in Pulverform auf der Basis von Magnesit und kohlenstoffhaltigem Material bekannt mit einer Korngröße zwischen 0,07 und 1 mm. Diese Masse ist wegen des fehlenden Feinanteils < 0,07 mm nicht für den Aufbau einer dichten Masse brauchbar. Weitere Nachteile sind darin zu sehen, daß aufgrund des Kohlenstoffanteils in der Masse die Gefahr besteht, daß eine höhere Porosität sich einstellt mit der Folge eines höheren Verschleißes. Weiterhin besteht die Gefahr, daß durch den Abbrand des Kohlenstoffs die Porosität weiter erhöht und der Verschleiß beschleunigt wird.

In einer Veröffentlichung in «Fachberichte Hüttenpraxis Metallweiterverarbeitung», Vol. 23, Nr. 5, 1985, S. 361 bis 366 mit dem Titel «Monolithische Zustellung von Stahlgießpfannen» wird darüber berichtet, daß sich basische thixotrope Vibrationsmassen in der Entwicklung befinden. Einzelheiten, wie Zusammensetzung, Kornaufbau usw., können der Veröffentlichung jedoch nicht entnommen werden.

Der vorliegenden Erfindung liegt die Aufgabe zugrunde, eine feuerfeste thixotrope selbsthärtende basische Vibrationsmasse vorzuschlagen, welche die geforderte hohe Standfestigkeit und Verschleißfestigkeit gegen erosiven Angriff aufweist.

Insbesondere soll die infiltrationshemmende und schlackenabweisende Wirkung der Zustellung verbessert werden.

Die Aufgabe wird erfindungsgemäß gelöst durch eine feuerfeste thixotrope selbsthärtende Vibrations-Masse auf der Basis von Sinter-Magnesit, die dadurch gekennzeichnet ist, daß die Masse folgende chemische Zusammensetzung (in Massen-%) hat:

0,1 bis 2,0% $SiO_2$
0,1 bis 30 % $Al_2O_3$
0,5 bis 3,0% $P_2O_5$
0,2 bis 1,5% $K_2O$ plus $Na_2O$ plus $LiO_2$
0,1 bis 2,0% $Fe_2O_3$
0,1 bis 0,5% $B_2O_3$
0,1 bis 3,0% CaO
Rest MgO

mit folgender kristallographischer Analyse (in Massen-%):

0   bis 30 % Korund
0,1 bis 0,5% Borsäure
0,5 bis 4   % Alkalipolyphosphate
Rest Sintermagnesit

und einer Kornfraktion der Vibrations-Masse von

10 bis 50% < 0,06 mm
 5 bis 20% 0,06 bis 0,5 mm
30 bis 85% als Rest: 0,5 bis 2 mm,

zur Zustellung metallurgischer Gefäße, insbesondere Stahlwerkspfannen, wobei die spinellbildende Vibrations-Masse aus Sintermagnesit und Korund durch ihr Wachsen beim Erhitzen (durch die eingefüllte Schmelze) der Schwindung und Rißbildung entgegenwirkt.

Durch die Erfindung wird dem Schlackenangriff und seinen Folgen auf das Feuerfest-Material durch die erfindungsgemäßen Maßnahmen sowohl hinsichtlich der Struktur (mineralogischer Aufbau) als auch der Textur (Dichte, Gasdurchlässigkeit, Kornverteilung, Porosität) begegnet.

Die aufeinander abgestimmte Zusammensetzung auf der Basis Magnesit oder Magnesit und Korund ermöglicht in vorteilhafter Weise einen zonenweisen Aufbau der feuerfesten Zustellung für die Stahlzone und für die Schlackenzone.

Der verwendete Sintermagnesit weist bevorzugt folgendes Kornspektrum auf:

15 bis 35% < 0,06 mm
 5 bis 15% 0,06 bis 0,5 mm
50 bis 80% 0,5 bis 2 mm.

Der verwendete Korund weist bevorzugt folgendes Kornspektrum auf:

50 bis 85% < 0,3 mm
15 bis 50% 0,3 bis 0,6 mm.

Dies führt zu einer verringerten Rißbildung wegen der Volumendehnung bei der Reaktion Magnesit/Korund.

Eine weitere Herabsetzung der Rißbildung kann erreicht werden, wenn in weiterer Ausgestaltung ein Korund verwendet wird mit einem Kornaufbau 100 < 0,06 mm.

Es ist ferner vorteilhaft, als Sintermagnesit ein Produkt zu verwenden mit folgender chemischer Zusammensetzung (in Massen-%):

0   bis 3,0% CaO
0,1 bis 2,0% $SiO_2$
Rest MgO und Verunreinigungen.

Der Sintermagnesit sollte bevorzugt eine Kornrohdichte von mindestens 3,35 g/cm³ sowie eine Gesamtporosität von 7% und weniger besitzen.

Es ist weiter vorteilhaft, als Korund ein Produkt zu verwenden mit folgender chemischer Zusammensetzung (in Massen-%):

97 bis 99,5% $Al_2O_3$
Rest Verunreinigungen.

Der Korund sollte bevorzugt eine Kornrohdichte von mindestens 3,40 g/cm³ sowie eine Gesamtporosität von 15% und weniger besitzen.

Nach einem weiteren Merkmal der Erfindung enthält die Vibrationsmasse 0,5 bis 2 Massen-% pulverförmige CaO-haltige Materialien als Härter, z.B. in Form von Ferro-Chrom-Schlacke, Elektroofen-Schlacke oder Calciumhydroxid. Durch den Zusatz eines solchen Härters kann die Schablonenziehzeit optimal geregelt werden. Die Anmachwassermenge beträgt in weiterer Ausgestaltung der Erfindung je 100 kg Trockenmasse 4,0 bis 7,0 kg.

Eine weitere Aufgabe besteht darin, ein geeignetes Verfahren zur Vibrationszustellung von metallurgischen Gefäßen, insbesondere von Stahlwerkspfannen, mit der erfindungsgemäßen feuerfesten thixotropen Masse vorzuschlagen.

Das erfindungsgemäße Verfahren zur Vibrationszustellung von metallurgischen Gefäßen, insbesondere von Stahlwerkspfannen, mit der vorgeschlagenen feuerfesten thixotropen selbsthärtenden basischen Masse, ist dadurch gekennzeichnet, daß die Bestandteile der Masse in trockenem Zustand intensiv gemischt werden, daß vor Beginn der Vibration die Anmachwassermenge zugegeben, die feuchte Masse ca. 4 Minuten gemischt, diese unter ständiger Vibration in den Raum zwischen einer eingebrachten Schablone und der Pfannenwand eingefüllt und die Zustellung nach dem Ausschalen aufgeheizt wird.

Gemäß einer bevorzugten Ausgestaltung wird die Anmachwassermenge mit einer Genauigkeit von mindestens 0,1 % zugegeben und die feuchte Masse maximal 4 Minuten gemischt.

Nach einem weiteren Merkmal der Erfindung wird im Bereich der Stahlzone der auszukleidenden Stahlwerkspfanne die Vibrationsmasse auf der Basis Magnesit und Korund und in der sich anschließenden Schlackenzone der Pfanne die Vibrationsmasse auf der Basis Magnesit unter ständiger Vibration in den Raum zwischen der eingebrachten Schablone und der Pfannenwand eingefüllt.

Dieser Aufbau ist vorteilhaft, da die rein magnesitische Masse besonders schlackenbeständig ist, während die spinellbildende Masse aus Magnesit und Korund zwar eine geringere Schlackenbeständigkeit besitzt, aber ein Wachsen beim Erhitzen durch den flüssigen Stahl erfährt, wodurch dem geringeren Schwinden entgegengewirkt wird.

Nach dem Ausschalen wird die Zustellung bevorzugt auf 150°C aufgeheizt mit einer maximalen Geschwindigkeit von 8°C/Stunde.

Die Erfindung wird nachstehend anhand von Ausführungsbeispielen erläutert:

*Beispiel 1*
Eine erfindungsgemäße thixotrope selbsthärtende Vibrationsmasse zur Zustellung einer Stahlgießpfanne mit einem Fassungsvermögen von 230 t wies folgende feuerfeste Komponenten in Massen-% auf:

25% Sintermagnesit mit einer Korngröße 0 bis 0,1 mm
10% Sintermagnesit mit einer Korngröße 0 bis 0,5 mm
10% Sintermagnesit mit einer Korngröße von 0,5 bis 1 mm
55% Sintermagnesit mit einer Korngröße von 1 bis 2 mm
2,5% Natriumpolyphosphat
0,2% Borsäure
0,25% Calciumhydroxid als Härter.

Der eingesetzte Sintermagnesit hatte folgende chemische Zusammensetzung (in Massen-%):

0,20% $SiO_2$
2,0 % $CaO$
>97% $MgO$.

Die Kornrohdichte betrug 3,38 $g/cm^3$ und die Gesamtporosität 5,0%.

Die feuerfesten Komponenten wurden in einem Mischer im trockenen Zustand intensiv gemischt und in Plastiksäcken verpackt.

Die chemische Analyse der Masse lautete (in Massen-%) wie folgt:

0,55% $SiO_2$
0,32% $Al_2O_3$
1,47% $P_2O_5$
0,54% $Na_2O$
0,23% $Fe_2O_3$
2,3 % $CaO$
Rest $MgO$.

Die Kornfraktion lag im Bereich des Anspruchs 2.

Die Masse ist tonfrei und ohne hydraulisches Bindemittel und weist daher kein Kristallwasser auf. Eine Explosionsgefahr bei schnellem Aufheizen besteht daher nicht. In einer mit dieser Masse zugestellten Pfanne können Entschwefelungsbehandlungen mit kalkhaltigen Substanzen mit verbesserten Ergebnissen vorgenommen und hochmanganhaltige Stähle vergossen werden.

Im Stahlwerk wurde die trockene Masse in Chargen von je 2 t in einen Zwangsmischer gegeben und unter Zusatz von 6,7 kg Anmachwasser je 100 kg Trockenmasse intensiv gemischt.

Die exakte Wasserdosierung erfolgte mit einer elektrischen Impulssteuerung mit einer Genauigkeit von 0,1%. Die Mischzeit nach der Wasserzugabe betrug 4 Minuten. Anschließend wurde die Masse aus der Mischvorrichtung ausgetragen und zur zuzustellenden Stahlgießpfanne transportiert; das Einfüllen der Mischung in den Raum zwischen einer eingebrachten Schablone und der Pfannenwand und das Vibrieren geschah innerhalb einer Zeit von 4 Minuten. Nach dem Vibrieren wurde die Schablone gezogen; die Zustellung wurde anschließend mit einer Geschwindigkeit von 8°C/Stunde auf 150°C aufgeheizt und anschließend auf Betriebstemperatur gebracht.

Die fertige Zustellung wies folgende Eigenschaften auf:

Vibrationsdichte (Rohdichte): 3,05 $g/cm^3$
Gesamtporosität 110°C: 17,0 Vol.-%
thermische Dehnung bis 1000°C: 1,2%
Kaltdruckfestigkeit nach 1000°C: 40 $N/mm^2$.

Zu Vergleichszwecken war ein Teil der Stahlgießpfanne in üblicher Weise mit Dolomitsteinen zugestellt worden. Nach Beendigung der Pfannenreise zeigte die Zustellung mit der erfindungsgemäßen Vibrations-Masse einen um 20% geringeren Verschleiß als die Dolomitsteinzustellung.

*Beispiel 2*

Eine erfindungsgemäße thixotrope selbsthärtende Vibrations-Masse zur Zustellung einer Stahlgießpfanne mit einem Fassungsvermögen von 230 t wies folgende feuerfeste Komponenten (in Massen-%) auf:

20% Korund mit einer Korngröße < 0,06 mm
15% Sintermagnesit mit einer Korngröße 0 bis 0,5 mm
15% Sintermagnesit mit einer Korngröße 0,5 bis 1 mm
50% Sintermagnesit mit einer Korngröße 1 bis 2 mm
2,5% Natriumpolyphosphat
0,2% Borsäure.

Die chemische Zusammensetzung des verwendeten Sintermagnesits sowie seine Kornrohdichte und Gesamtporosität entsprachen den Werten gemäß Beispiel 1.

Der eingesetzte Korund hatte folgende chemische Zusammensetzung (in Massen-%):

>99.5% $Al_2O_3$
Rest Verunreinigungen.

Die feuerfesten Komponenten wurden in einem Zwangsmischer im trockenen Zustand intensiv gemischt und in Plastiksäcken verpackt.

Die chemische Analyse der Masse lautete (in Massen-%) wie folgt:

0,44% $SiO_2$
20,1% $Al_2O_3$
1,47% $P_2O_5$
0,59% $Na_2O$
0,2 % $B_2O_3$
0,18% $Fe_2O_3$
1,6 % $CaO$
Rest $MgO$.

Die Kornfraktion entsprach der gemäß Anspruch 2.

Auch diese Masse ist tonfrei und weist kein hydraulisches Bindemittel auf.

Im Stahlwerk wurde die trockene Masse in Chargen von je 2 t in einen Zwangsmischer gegeben und unter Zusatz von 3,5 kg Anmachwasser je 100 kg Trockenmasse intensiv gemischt. Die exakte Wasserdosierung erfolgte mit einer elektrischen Impulssteuerung mit einer Genauigkeit von 0,1%. Die Misch-Zeit nach der Wasserzugabe betrug 4 Minuten. Anschließend wurde die Masse aus der Mischvorrichtung ausgetragen und zur zuzustellenden Stahlgießpfanne transportiert; das Einfüllen der Mischung in den Raum zwischen einer eingebrachten Schablone und der Pfannenwand und das Vibrieren geschah innerhalb einer Zeit von 4 Minuten.

Nach dem Vibrieren wurde die Schablone gezogen; die Zustellung wurde anschließend mit einer Geschwindigkeit von 8°C/Stunde auf 150°C aufgeheizt und anschließend auf Betriebstemperatur gebracht.

Die fertige Zustellung wies folgende Eigenschaften auf:

Vibrationsdichte (Rohdichte): 3,02 g/cm$^3$
Gesamtporosität 110°C: 15,8 Vol.-%
thermische Dehnung bis 1000°C: 1,1%.
Kaltdruckfestigkeit nach 1000°C: 90 N/mm$^2$.

Zu Vergleichszwecken war ein Teil der Stahlgießpfanne in üblicher Weise mit Dolomitsteinen zugestellt worden. Nach Beendigung der Pfannenreise zeigte die Zustellung mit der erfindungsgemäßen Vibrations-Masse einen um 10% geringeren Verschleiß als die Dolomitsteinzustellung.

*Beispiel 3*

Eine erfindungsgemäße thixotrope selbsthärtende Vibrations-Masse zur Zustellung einer Stahlgießpfanne mit einem Fassungsvermögen von 230 t wies folgende feuerfeste Komponenten (in Massen-%) auf:

10% Korund mit einer Korngröße < 0,6 mm
25% Sintermagnesit mit einer Korngröße 0 bis 0,5 mm
10% Sintermagnesit mit einer Korngröße 0,5 bis 1 mm
55% Sintermagnesit mit einer Korngröße 1 bis 2 mm
2,5% Natriumpolyphosphat
0,2% Borsäure.

Die chemische Zusammensetzung des verwendeten Sintermagnesits (in Massen-%) betrug

0,20% SiO$_2$
2,0 % CaO
>97% MgO.

Die Kornrohdichte belief sich auf 5,38 g/cm$^3$ und die Gesamtporosität auf 5,0%.

Der eingesetzte Korund hatte folgende chemische Zusammensetzung (in Massen-%):

99,5%% Al$_2$O$_3$
Rest Verunreinigungen.

Die feuerfesten Komponenten wurden in einem Zwangsmischer im trockenen Zustand intensiv gemischt und in Plastiksäcken verpackt.

Die chemische Analyse der Masse lautete (in Massen-%) wie folgt:

0,50% SiO$_2$
10,2% Al$_2$O$_3$
1,47% P$_2$O$_5$
0,57% Na$_2$O
0,21% Fe$_2$O$_3$
1,80% CaO
Rest MgO.

Die Kornfraktionen betrugen:

28% <0,06 mm
9% 0,06 bis 0,5 mm
69% 0,5 bis 2 mm

Auch diese Masse ist tonfrei und weist kein hydraulisches Bindemittel auf.

Im Stahlwerk wurde die trockene Masse in Chargen von je 2 t in einen Zwangsmischer gegeben und unter Zusatz von 7,0 kg Anmachwasser je 100 kg Trockenmasse intensiv gemischt. Die exakte Wasserdosierung erfolgte mit einer elektrischen Impulssteuerung mit einer Genauigkeit von 0,1%. Die Mischzeit nach der Wasserzugabe betrug 5 Minuten. Anschließend wurde die Masse aus der Mischvorrichtung ausgetragen und zur zuzustellenden Stahlgießpfanne transportiert.

Nach dem Vibrieren wurde die Schablone gezogen; die Zustellung wurde anschließend mit einer Geschwindigkeit von 8°C/Stunde auf 150°C aufgeheizt und anschließend auf Betriebstemperatur gebracht.

Die fertige Zustellung wies folgende Eigenschaften auf:

Vibrationsdichte (Rohdichte): 2,96 g/cm$^3$
Gesamtporosität bei 110°C: 20 Vol.-%
thermische Dehnung bis 1000°C: 20 N/mm$^2$
Kaltdruckfestigkeit nach 1000°C: 20 N/mm$^2$.

Zu Vergleichszwecken war ein Teil der Stahlgießpfanne in üblicher Weise mit Dolomitsteinen zugestellt worden. Nach Beendigung der Pfannenreise zeigte die Zustellung mit der erfindungsgemäßen Vibrations-Masse einen um 10% geringeren Verschleiß als die Dolomitsteinzustellung.

**Patentansprüche**

1. Feuerfeste thixotrope selbsthärtende Vibrations-Masse auf der Basis von Magnesit zur Erzielung einer Vibrationsdichte von mindestens 3,0 g/cm$^3$, gekennzeichnet durch folgende chemische Zusammensetzung (in Massen-%):

0,1 bis 2,0% SiO$_2$
0,1 bis 30 % Al$_2$O$_3$
0,5 bis 3,0% P$_2$O$_5$
0,2 bis 1,5% K$_2$O plus Na$_2$O plus LiO$_2$
0,1 bis 2,0% Fe$_2$O$_3$
0,1 bis 0,5% B$_2$O$_3$
0,1 bis 3,0% CaO
Rest MgO

und folgender kristallographischer Analyse (in Massen-%):

0   bis 30 % Korund
0,1 bis 0,5% Borsäure
0,5 bis 4   % Alkalipolyphosphate
Rest Sintermagnesit

und folgender Kornfraktion der Vibrations Masse:

10 bis 50% < 0,06 mm
5 bis 20% 0,06 bis 0,5 mm
30 bis 85% als Rest: 0,5 bis 2 mm,

zur Zustellung metallurgischer Gefäße, insbesondere Stahlwerkspfannen, wobei die spinellbildende Vibrations-Masse aus Sintermagnesit und Korund durch ihr Wachsen beim Erhitzen (durch die eingefüllte Schmelze) der Schwindung und Rißbildung entgegenwirkt.

2. Masse nach Anspruch 1, dadurch gekennzeichnet, daß der Sintermagnesit folgendes Kornspektrum aufweist:

15 bis 35% < 0,06 mm
5 bis 15% 0,06 bis 0,5 mm
50 bis 80% 0,5 bis 2 mm.

3. Masse nach Anspruch 1 oder 2, dadurch gekennzeichnet, daß der Korund folgendes Kornspektrum aufweist:

50 bis 85% < 0,3 mm
15 bis 50% 0,3 bis 0,6 mm.

4. Masse nach Anspruch 1 oder 2, dadurch gekennzeichnet, daß der Korund folgendes Kornspektrum aufweist:

100%     < 0,06 mm.

5. Masse nach Anspruch 1 bis 4, dadurch gekennzeichnet, daß der Sintermagnesit folgende chemische Zusammensetzung (in Massen-%) hat:

0,1 bis 3,0% CaO
0,1 bis 2,0% $SiO_2$
Rest MgO und Verunreinigungen

und eine Korndichte von mindestens 3,35 g/cm³ sowie eine Gesamtporosität von 7% und weniger besitzt.

6. Masse nach Anspruch 1 bis 4, dadurch gekennzeichnet, daß der Korund folgende chemische Zusammensetzung (in Massen-%) hat:

97 bis 99,5% $Al_2O_3$
Rest Verunreinigungen.

7. Masse nach Anspruch 1 bis 6, dadurch gekennzeichnet, daß sie 0,5 bis 2 Massenprozent pulverförmige CaO-haltige Materialien als Härter enthält.

8. Masse nach Anspruch 1 bis 7, dadurch gekennzeichnet, daß die Anmachwassermenge je 100 kg Trockenmasse 4,0 bis 7,0 kg beträgt.

9. Verfahren zur Vibrationszustellung von metallurgischen Gefäßen, insbesondere von Stahlwerkspfannen, mit einer feuerfesten thixotropen Masse nach den Ansprüchen 1 bis 8, dadurch gekennzeichnet, daß die Bestandteile der Masse im trockenen Zustand intensiv gemischt werden, daß vor Beginn der Vibration die Anmachwassermenge zugegeben, die feuchte Masse ca. 4 Minuten gemischt, diese unter ständiger Vibration in den Raum zwischen einer eingebrachten Schablone und der Pfannenwand eingefüllt und die Zustellung nach dem Ausschalen aufgeheizt wird.

10. Verfahren nach Anspruch 9, dadurch gekennzeichnet, daß die Anmachwassermenge mit einer Genauigkeit von mindestens 0,1% zugegeben und die feuchte Masse maximal 4 Minuten gemischt wird.

11. Verfahren nach Anspruch 9 und 10, dadurch gekennzeichnet, daß im Bereich der Stahlzone die Vibrations-Masse auf der Basis Magnesit und Korund unter ständiger Vibration in den Raum zwischen einer eingebrachten Schablone und der Pfannenwand eingefüllt und anschließend in der Schlackenzone der Pfanne, die Vibrations-Masse auf der Basis Magnesit unter ständiger Vibration in den Raum zwischen der eingebrachten Schablone und der Pfannenwand eingefüllt wird.

12. Verfahren nach Anspruch 9 bis 11, dadurch gekennzeichnet, daß die Zustellung nach dem Ausschalen auf 150°C mit einer maximalen Geschwindigkeit von 8°C/Stunde aufgeheizt wird.

## Claims

1. A refractory thixotropic self-hardening vibration compound on a magnesite base to produce a vibration density of at least 3.0 g/cm³, characterized by the following chemical composition (in % by weight):

0.1 to 2.0% $SiO_2$
0.1 to 30 % $Al_2O_3$
0.5 to 3.0% $P_2O_5$
0.2 to 1.5% $K_2O$ plus $Na_2O$ plus $LiO_2$
0.1 to 2.0% $Fe_2O_3$
0.1 to 0.5% $B_2O_3$
0.1 to 3.0% CaO
residue MgO

and the following crystallographic analysis (in % by weight):

0     to 30 % corundum
0.1 to 0.5% boric acid
0.5 to 4   % alkali polyphosphates
residue sintered magnesite

and the following grain fraction of the vibration compound:

10 to 50% <0.06 mm
5 to 20% 0.06 to 0.5 mm
30 to 85% as residue: 0.5 to 2 mm

for the lining of metallurgical vessels, more particularly steelworks ladles, the spinel-forming vibration compound of sintered magnesite and corundum counteracting shrinkage and crack formation by its growth during heating (by the introduced melt).

2. A compound according to claim 1, characterized in that the sintered magnesite has the following grain spectrum:

15 to 35% <0.06 mm
5 to 15% 0.06 to 0.5 mm
50 to 80% 0.5 to 2 mm.

3. A compound according to claims 1 or 2, characterized in that the corundum has the following grain spectrum:

50 to 85% <0.3 mm
15 to 50% 0.3 to 0.6 mm.

4. A compound according to claims 1 or 2, characterized in that the corundum has the following grain spectrum:

100%     <0.06 mm.

5. A compound according to claims 1 to 4, characterized in that the sintered magnesite has the following chemical composition (in % by weight):

0.1 to 3.0% CaO
0.1 to 2.0% $SiO_2$
residue MgO and impurities

and a grain density of at least 3.35 $g/cm^3$ and a total porosity of 7% and below.

6. A compound according to claims 1 to 4, characterized in that the corundum has the following chemical composition (in % by weight):

97 to 99.5% $Al_2O_3$
residue impurities.

7. A compound according to claims 1 to 6, characterized in that it contains 0.5 to 2% by weight of pulverulent CaO-containing materials as a hardener.

8. A compound according to claims 1 to 7, characterized in that the quantity of mixing water is 4.0 to 7.0 kg per 100 kg of dry weight.

9. A process for the vibration lining of metallurgical vessels, more particularly steelworks ladles, using a refractory thixotropic compound according to claims 1 to 8, characterized in that the components of the compound are intensively mixed in the dry conditions, the quantity of mixing water is added before vibration starts, the wet compound is mixed for about 4 minutes and filled with constant vibration into the space between an introduced template and the ladle wall, and the lining is heated after removal of the template.

10. A process according to claim 9, characterized in that the quantity of mixing water is added with a precision of at least 0.1% and the wet composition is mixed for 4 minutes at the most.

11. A process according to claims 9 and 10, characterized in that the area of the steel zone the vibration compound on the basis of magnetise and corundum is introduced with constant vibration into the space between an introduced template and the ladle wall, whereafter in the slag zone of the ladle the vibration compound on the basis of magnesite is introduced with constant vibration into the space between the introduced template and the ladle wall.

12. A process according to claims 9 to 11, characterized in that after removal of the template the lining is heated to 150°C at a maximum speed of 8°C per hour.

## Revendications

1. Une masse vibratoire réfractaire thixotrope autodurcissante à base de magnésite pour atteindre une densité vibratoire d'au moins 3,0 $g/cm^3$, caractérisée par la composition chimique suivante (en % en masse):

0,1 à 2,0% $SiO_2$
0,1 à 30 % $Al_2O_3$
0,5 à 3,0% $P_2O_5$
0,2 à 1,5% $K_2O$ plus $Na_2O$ plus $LiO_2$
0,1 à 2,0% $Fe_2O_3$

0,1 à 0,5% $B_2O_3$
0,1 à 3,0% CaO
reste MgO

et l'analyse cristallographique suivante (en % en masse):

0 à 30 % de corindon
0,1 to 0,5% d'acide borique
0,5 à 4 % de polyphosphate alcalin
reste magnésite frittée

et la fraction granulométrique de la masse vibratoire de:

10 à 50% <0,06 mm
5 à 20% de 0,06 à 0,5 mm
30 à 85% en tant que reste: 0,5 à 2 mm

pour la réparation de récipients métallurgiques, en particulier de poches de coulée métallurgiques, la masse vibratoire formatrice de spinelles en magnésite frittée et corindon s'opposant par sa croissance lors du chauffage (par la masse fondue versée), à la contraction et à la formation de fissures.

2. Masse selon la revendication 1, caractérisée en ce que la magnésite frittée présente le spectre granulométrique suivant:

15 à 35% <0,06 mm
5 à 15% 0,06 à 0,5 mm
50 à 80% 0,5 à 2 mm.

3. Masse selon la revendication 1 ou 2, caractérisée en ce que le corindon présente le spectre granulométrique suivant:

50 à 85% <0,3 mm
15 à 50% 0,3 à 0,6 mm

4. Masse selon la revendication 1 ou 2, caractérisée en ce que le corindon présente le spectre granulométrique suivant:

100 <0,06 mm.

5. Masse selon la revendication 1 à 4, caractérisée en ce que la magnésite frittée a la composition chimique suivante (en % en masse):

0 à 3,0% CaO
0,1 à 2,0% $SiO_2$
reste MgO et impuretés

et une densité granulométrique brute d'au moins 3,35 $g/cm^3$ ainsi qu'une porosité globale de 7% et moins.

6. Masse selon la revendication 1 à 4, caractérisée en ce que le corindon a la composition chimique suivante (en % en masse):

97 à 99,5% $Al_2O_3$
reste impuretés.

7. Masse selon la revendication 1 à 6, caractérisée en ce qu'elle contient de 0,5 à 2% en masse de matériaux pulvérulents contenant du CaO en tant que durcisseur.

8. Masse selon la revendication 1 à 7, caractérisée en ce que la quantité d'eau de délayage est de 4,0 à 7,0 kg par 100 kg de masse sèche.

9. Procédé pour la réparation vibratoire de récipients métallurgiques, en particulier de poches de coulée métallurgiques, avec une masse réfractaire thixotrope selon les revendications 1 à 8, caractérisé en ce que les composants de la masse sont mélangés intensivement à l'état sec, que la masse d'eau de délayage est ajoutée avant le début de la mise en vibration, la masse humide est mélangée pendant environ 4 minutes, que celle-ci est coulée dans l'espace entre un gabarit rapporté et la paroi de la poche de coulée sous vibration permanente, et la réparation est chauffée après le décoffrage.

10. Procédé selon la revendication 9, caractérisé en ce que la quantité d'eau de délayage est ajoutée avec une précision d'au moins 0,1% et la masse humide est mélangée pendant au plus 4 minutes.

11. Procédé selon la revendication 9 et 10, caractérisé en ce que la masse vibratoire à base de magnésite et de corindon est coulée dans la région de la zone d'acier de la poche de coulée métallurgique à revêtir sous vibration permanente dans le volume entre le gabarit rapporté et la paroi de la poche de coulée et la masse vibratoire à base de magnésite est ensuite coulée dans la zone de laitier adjacente de la poche de coulée, sous vibration permanente, dans le volume entre le gabarit rapporté et la paroi de la poche de coulée.

12. Procédé selon la revendication 9 à 11, caractérisé en ce que, après le décoffrage, la réparation est chauffée à 150°C à une vitesse maximale de 8°C/heure.